# EUROPEAN PATENT APPLICATION

(11) **EP 4 000 716 A1**
(43) Date of publication of application: **25.05.2022**
(21) Application number: 20209046.0
(22) Date of filing: 20.11.2020
(51) Int. Cl.: B01D 53/48, C01B 17/78

(54) **PROCESS FOR DESULFURIZATION OF A PROCESS GAS**

(71) Applicant: Haldor Topsøe A/S, 2800 Kgs. Lyngby (DK)
(72) Inventor: LYKKE, Mads, 2700 Brønshøj (DK)
(74) Representative: Haldor Topsøe A/S

(57) **Abstract**

The present disclosure relates to a process and a process plant for desulfurizing a process gas comprising elemental sulfur, H₂ and water, comprising the steps of
a. directing the process gas to contact a material catalytically active in hydrogenation to provide a hydrogenated process gas under effective hydrogenation conditions,
b. cooling and phase separating the hydrogenated process gas, to provide a water condensate and a moisture reduced hydrogenated process gas,
c. oxidizing the moisture reduced hydrogenated process gas after addition of a source of O₂, to form an SO₂ rich process gas,
d. catalytically oxidizing the SO₂ rich process gas to provide an SO₃ rich process gas
e. hydrating the SO₃ in said SO₃ rich process gas to form H₂SO₄ and condensing sulfuric acid and providing a desulfurized process gas substantially free of H₂SO₄ and a liquid stream of concentrated sulfuric acid.

This has the associated benefit of providing an SO₂ rich process gas of lower volume, compared to a process without intermediate withdrawal of water. If the process gas does not contain a sufficient amount of hydrogen, this may be added.

## Description

The present invention relates to a process for desulfurization of a process gas, especially a process gas rich in water, such as the tail gas of a Claus desulfurization process.

The wet gas sulfuric acid (WSA^{®}) process is an efficient process for removal of sulfur compounds from process off-gases prior to release to the atmosphere. The capital and operating cost of the equipment required for a WSA^{®} process is however highly dependent on the volumetric flow of off-gas, and therefore it is desirable to avoid directing gases not requiring treatment to the WSA^{®} process.

A common constituent in off-gases is water, especially in Claus tail gas, where the water content may be more than 40%. Removal of water is typically made by cooling and condensation, but the Claus tail gas also comprises a small amount of elemental sulfur, which will solidify and cause fouling and blockage of the cooling equipment.

Elemental sulfur may react with hydrogen in the presence of a material catalytically active in hydrogenation to produce hydrogen sulfide. By such catalytical hydrogenation of the elemental sulfur of the Claus tail gas, the Claus tail gas will not contain material which will solidify during cooling, and accordingly removal of water from the hydrogenated Claus tail gas by cooling and condensation will be possible. Furthermore, hydrogenation of SO₂ in the Claus tail gas will form H₂S, which is much less soluble in water and thus less sulfur will be lost from the Claus tail gas in the cooling and condensation step.

Such a process may even be combined with recirculation of the sulfuric acid produced in the WSA^{®} process to feed the Claus tail gas, such that only elemental sulfur is produced.

For the purpose of the present application, a stoichiometric amount of oxygen shall be defined under the assumption that the products derived from N, H, C, S and O in the feed gas are N₂, H₂O, CO₂ and SO₂. If less than a stoichiometric amount of oxygen is present (also called sub-stoichiometric), this means that not all feed components are fully oxidized. For a Claus plant gas feed, this means that the process gas after sub-stoichiometric combustion/reaction will contain unconverted H₂S, NH₃ and hydrocarbons from the feed stream(s) and H₂, CO, COS, SO₂ and CS₂ formed in the O₂ deficit environment.

For the purpose of the present application, a support fuel shall be defined as a composition which, when oxidized with O₂ will form N₂, H₂O, CO₂ and SO₂ as the reaction product and release a substantial amount of energy by the reactions. A mixture of hydrocarbons (e.g. natural gas, with CH₄ and C₂H₆) as well as H₂S are typical support fuels in this respect, but a support fuel could also comprise CO, NH₃ and H₂.

For the purpose of the present application, oxygen (O₂) is understood as a stream containing O₂, such as air, enriched air and pure oxygen, but could also be a process gas containing O₂ in substantial concentrations such as above 10%.

For the purpose of the present application, the unit wt% shall designate weight/weight % and the unit vol% shall designate volume/volume %.

For the purpose of the present application, where concentrations in the gas phase are given, they are, unless otherwise specified, given as volume/volume (molar) concentration. For gas phase concentrations ppm shall accordingly mean molar/volumetric parts per million.

For the purpose of the present application, the unit Nm3 shall be understood as "normal" m3, i.e. the amount of gas taken up this volume at 0°C and 1 atmosphere.

For the purpose of the present application, the unit "Barg", shall in compliance with the practice of the field be used to denote Bar, gauge, i.e. the pressure relative to atmospheric pressure.

A broad embodiment of the present disclosure relates to a process for desulfurizing a process gas comprising elemental sulfur, H₂ and water, comprising the steps of
a. directing the process gas to contact a material catalytically active in hydrogenation to provide a hydrogenated process gas under effective hydrogenation conditions,
b. cooling and phase separating the hydrogenated process gas, to provide a water condensate and a moisture reduced hydrogenated process gas,
c. oxidizing the moisture reduced hydrogenated process gas after addition of a source of O₂, to form an SO₂ rich process gas,
d. catalytically oxidizing the SO₂ rich process gas to provide an SO₃ rich process gas
e. hydrating the SO₃ in said SO₃ rich process gas to form H₂SO₄ and condensing sulfuric acid and providing a desulfurized process gas substantially free of H₂SO₄ and a liquid stream of concentrated sulfuric acid.

This has the associated benefit of providing an SO₂ rich process gas of lower volume, compared to a process without intermediate withdrawal of water, such that the size and cost of downstream equipment is reduced. If the process gas does not contain a sufficient amount of hydrogen, this may be added.

In a further embodiment the material catalytically active in hydrogenation comprises from 2 wt% to 25 wt% of metal from group 6 of the Periodic table of elements, such as Mo or W, in combination with 1 wt% to 10 wt% of metal from group 8 of the Periodic table of elements, such as Co or Ni, supported on a refractive material, typically alumina, silica or titania. This has the associated benefit of such a catalytically active material being robust, active and selective in hydrogenation of elemental sulfur compounds. A preferred catalytically active material comprises Mo and Co on alumina.

In a further embodiment effective hydrogenation conditions involves a temperature from 200°C to 300°C and a pressure of -0.2 Barg to 1.5 Barg. This has the associated benefit of these conditions being cost effective in the integration of the hydrogenation process with a downstream WSA^{®} process, and possibly an upstream Claus process, and allows for a suction blower reducing the pressure to below atmospheric pressure.

In a further embodiment the step of cooling and phase separating the hydrogenated process gas comprises adding an amount of water, which optionally comprises an amount of said water condensate. This has the associated benefit of such a process being cost effective in capital and operating costs.

In a further embodiment oxidizing the moisture reduced hydrogenated process gas involves directing an amount of moisture reduced hydrogenated process gas for thermal incineration optionally together with a support fuel, such as natural gas or an H₂S rich gas, to provide an incinerated process gas. This has the associated benefit of incineration providing an efficient and simple destruction of impurities in the moisture reduced hydrogenated process gas.

In a further embodiment oxidizing the moisture reduced hydrogenated process gas involves heating an amount of moisture reduced hydrogenated process gas for homogeneous oxidation to a temperature of more than 400°C and less than 800°C to provide a partially oxidized process gas, wherein said heating optionally involves combining the amount of moisture reduced hydrogenated process gas for homogeneous oxidation with an incinerated process gas. This has the associated benefit of reducing the amount of support fuel required for incineration and the extent of heat exchange required to cool down incinerated process gas to match the required conditions of the downstream SO₂ oxidation process. A reduction of the amount of support fuel further has the benefit of reducing the downstream equipment size, as less combustion air is added to the process gas volume.

In a further embodiment oxidizing the moisture reduced hydrogenated process gas involves directing a process gas for catalytic oxidation to contact a material catalytically active in oxidation of one or more of H₂S, CO, H₂ and hydrocarbons, wherein said process gas for catalytic oxidation comprises one or more of an amount of said moisture reduced hydrogenated process gas, said incinerated process gas, said homogeneously oxidized process gas and an amount of process gas comprising a sulfur source. This has the associated benefit that such catalytic oxidation of an amount of the moisture reduced hydrogenated process gas may be carried out without requiring highly elevated temperatures, and thus the amount of support fuel may be reduced, or even completely avoided, such that all oxidation of moisture reduced hydrogenated process gas for homogeneous oxidation is carried out catalytically, e.g. at temperatures below 600°C.

In a further embodiment the process further comprises the steps of
f. directing a sulfur rich feedstock to a sub-stoichiometric combustion to provide a Claus feed gas rich in H₂S and SO₂,
g. directing said Claus feed gas to contact a material catalytically active in the Claus process, to provide a gas rich in elemental sulfur,
h. cooling said gas rich in elemental sulfur, to condense an amount of elemental sulfur for withdrawal, and produce a process gas comprising a reduced amount of elemental sulfur,
i. optionally repeating steps g and h, with said process gas as feed gas in step f,
j. providing said process gas comprising a reduced amount of elemental sulfur, optionally after addition of hydrogen, as said process gas comprising elemental sulfur, H₂ and water.

This has the associated benefit of integrating a Claus process efficiently with a WSA^{®} process, wherein the latter has a reduced equipment volume due to the fact that an amount of water has been removed.

In a further embodiment said sulfur rich feedstock comprises an amount of said sulfuric acid. This has the associated benefit of integrating a Claus process efficiently with a WSA^{®} process, under production of only a single sulfur product, in manner reducing the volume of the Claus process due to the inherent oxygen carrying ability of recycled H₂SO₄, wherein the WSA^{®} has a reduced equipment volume due to the fact that an amount of water has been removed.

A further aspect of the present disclosure relates to a process plant comprising a hydrogenation reactor, having an inlet and an outlet, water condenser having an inlet, a liquid phase outlet and a gas phase outlet, a process gas oxidizer having a process gas inlet and a process gas outlet, an SO₂ converter having an inlet and an outlet and a sulfuric acid condenser having an inlet, a liquid outlet and a gas outlet, wherein the hydrogenation reactor inlet is configured for receiving a process gas and the hydrogenation reactor outlet is in fluid communication with the water condenser inlet, the water condenser liquid phase outlet is configured for withdrawal of water condensate and the water condenser gas phase outlet in in fluid communication with the process gas oxidizer process gas inlet and the process gas oxidizer process gas outlet is in fluid communication with the SO₂ converter inlet and the SO₂ converter outlet is in fluid communication with the sulfuric acid condenser inlet, the sulfuric acid condenser liquid outlet is configured for withdrawal of sulfuric acid and the sulfuric acid condenser gas outlet is configured for withdrawal of desulfurized process gas. This has the associated benefit of a process plant providing an SO₂ rich process gas of lower volume, compared to a process without intermediate withdrawal of water condensate. If the process gas does not contain a sufficient amount of hydrogen, this may be added.

In a further embodiment said process gas oxidizer comprises an incinerator which further has one or more inlets configured for receiving a support fuel and combustion air. This has the associated benefit of incineration providing an efficient and simple destruction of impurities in the moisture reduced hydrogenated process gas.

In a further embodiment said process gas oxidizer comprises a catalytic oxidation reactor, having an inlet and an outlet and optionally further has one or more inlets configured for receiving a support fuel process gas inlet and a combustion air. This has the associated benefit of such catalytic oxidation of an amount of the moisture reduced hydrogenated process gas may be carried out without requiring elevated temperatures, and thus the amount of support fuel may be reduced, or even completely avoided, such that all oxidation of moisture reduced hydrogenated process gas for homogeneous oxidation is carried out catalytically, e.g. at temperatures below 600°C.

In a further embodiment said process plant further comprises a Claus reaction furnace having an inlet and an outlet, and a Claus reactor having an inlet, an outlet for withdrawal of sulfur and a Claus tail gas outlet, wherein said Claus reaction furnace inlet is configured for receiving a sulfur rich gas and a gas rich in O2 and wherein the Claus reaction furnace outlet is in fluid communication with the Claus reactor inlet and wherein the Claus tail gas outlet is in fluid communication with the inlet of the hydrogenation reactor. This has the associated benefit of integrating a Claus process efficiently with a WSA^{®} process, wherein the latter has a reduced equipment volume due to the fact that an amount of water has been removed.

In a further embodiment said outlet for withdrawal of sulfuric acid is in fluid communication with an inlet to the Claus reaction furnace. This has the associated benefit of integrating a Claus process efficiently with a WSA^{®} process, under production of only a single sulfur product, in manner reducing the volume of the Claus process due to the inherent oxygen carrying ability of recycled H₂SO₄, wherein the WSA^{®} has a reduced equipment volume due to the fact that an amount of water has been removed.

The Claus process is a desulfurization process converting sulfur in a sulfur rich feed gas to elemental sulfur.

For maximum conversion to elemental sulfur, sulfur compounds in the feed gas must be converted corresponding to a ratio of H₂S to SO₂ being 2:1, which is carried out by sub-stoichiometric oxidation of sulfur compounds in a Claus reaction furnace.

H₂S + 1.5 O₂ - > SO₂ + H₂O

The stoichiometric ratio between H₂S and SO₂ is controlled by controlling the amount of oxygen in the Claus reaction furnace. Oxygen is typically supplied by atmospheric air, but can also be O₂ enriched air or even pure O₂.

The oxygen addition to the Claus reaction furnace must also take into account the amounts of NH₃, CO, H₂ and hydrocarbons in the feed streams, and due to the sub-stoichiometric amount of oxygen, the Claus reaction furnace product may comprise a high number of different compounds, including CO, H₂, CS₂ and COS.

If the combustion temperature in Claus reaction furnace is less than 1100°C the conversion of e.g. NH₃ may be incomplete. The consequence of this will be a Claus converter feed gas having a potential for formation of ammonia salts, such as (NH₄)₂SO₄ and (NH₄)₂S₂O₃ which may plug the Claus condenser, so it may be desirable to avoid directing NH₃ to the Claus reaction furnace, if possible.

The partially oxidized Claus converter feed gas is then converted to elemental sulfur by the following reaction, homogeneously at elevated temperatures immediately after the Claus reaction furnace and at a temperature typically above 200°C in the presence of a catalytically active material, such as activated aluminum(III) oxide or titanium(IV) oxide.

2H₂S + SO₂ -> 3/8 S₈ + 2H₂O

Often 3-4 Claus converters are operated in series, with intermediate cooling, sulfur condensation and reheating, to increase the conversion to a maximum.

The control of temperature in the Claus process is important to ensure that elemental sulfur formed in catalytic converter remains gaseous, such that it is condensed in the desired process position only. As the Claus reaction is exothermic, a further restriction is related to the fact that as the Claus process is exothermic it is beneficial to operate at low temperatures.

An alternative to the above process is the so-called sub-dewpoint Claus process, in which the catalytically active material operates at temperatures where elemental sulfur is not on the gas phase. Such a sub-dewpoint Claus process will require an appropriate scheme for withdrawal of condensed sulfur, e.g. by pulsing of the temperature and purging of elementary sulfur by an inert gas.

Even with 3-4 Claus converters/condensers/reheaters in series it is not possible to reach more than -98% sulfur recovery, which is insufficient to comply with most environmental legislations. Therefore, the Claus plant is typically equipped with a so-called Claus tail gas solution, where the above mentioned sub-dewpoint process is an example. Numerous tail gas processes exist, having different features. To achieve very high removal efficiencies these Claus tail gas plants become complicated and approach the same cost as the Claus plant itself.

The produced elemental sulfur, does typically not have a direct use in the plants producing the H₂S containing waste stream, but elemental sulfur is simple to transport to other sites and to store for prolonged periods.

The wet gas sulfuric acid (WSA^{®}) process carried out in WSA^{®} unit, typically comprising an incinerator for converting all sulfur compounds to SO₂ and a minor amount of SO₃, a reactor for catalytic SO₂ oxidation to SO₃ and a sulfuric acid condenser for condensation of concentrated sulfuric acid, is very suitable for cleaning Claus tail gas, either to produce commercial grade sulfuric acid or to produce sulfur by recycling the acid to the Claus reaction furnace.

The reactor for SO₂ oxidation to SO₃ will contain a material catalytically active in this process, which typically comprises a vanadium alkali melt on a refractive carrier, often silica or alumina, preferably as a diatomaceous earth, which has a high surface area.

The WSA^{®} process requires a water content in the process gas that is higher than the sulfur content. This is because the moisture is used to hydrate SO₃ to H₂SO₄ in the condensation step. Higher moisture can be tolerated and substantially all will pass through the unit and be released with the exhaust gas, but like an inert gas, excess moisture will increase equipment size and operating cost. Furthermore, very high moisture will slightly reduce the concentration of the produced acid.

To reduce the water content of the process gas directed to the WSA^{®} process, an intermediate moisture reducing step, comprising cooling and condensation of water may be considered, but if the process gas is a Claus tail gas, there will be a certain content of elemental sulfur, which will condense as a liquid around 150°C and solidify at 115-120°C and thus block the water lines and foul heat exchanger surfaces in the cooling and condensation unit, typically operating at lower than 70 °C. Furthermore, if both H₂S and SO₂ are present in the process gas entering the cooling and condensation unit, both can become dissolved in the condensed water phase and react to form elemental sulfur.

The composition of the Claus tail gas is highly compatible with catalytic processes, as it has undergone a partial oxidation in the Claus reaction furnace, and therefore contains only gaseous constituents, and an amount of excess hydrogen due to the partial combustion in the Claus reaction furnace. It is known to direct the Claus tail gas to a sulfur resistant hydrogenation catalyst, for hydrogenation of elemental sulfur, SO₂, COS and CS₂ under formation of H₂S with subsequent capture of H₂S in an amine scrubber, and subsequent direction of the H₂S to the Claus process.

The separation of H₂S in an amine scrubber is however a costly and thermally inefficient process, but if the sulfur of the H₂S is withdrawn from the process gas by the WSA^{®} process a more efficient process may be obtained.

Such a process would involve an intermediate moisture reducing step, comprising directing a process gas comprising elemental sulfur and hydrogen to contact a material catalytically active in hydrogenation of sulfur, followed by a condensation step.

This material catalytically active in hydrogenation would typically comprise an amount of metal from group 6 of the Periodic table of elements, such as Mo or W, in combination with an amount of metal from group 8 of the Periodic table of elements, such as Co or Ni, supported on a refractive material, typically alumina, silica or titania, and would be active in sulfided form, which is rapidly established in the sulfur containing process stream.

The water condensation step may be carried out in multiple ways, including cooling and phase separation of a liquid phase and a gas phase. An efficient configuration is to quench the hydrogenated gas stream by contact with cooled water, such that a combined water stream of quench water and water condensed may be separated from a moisture reduced hydrogenated process gas and withdrawn. A part of the combined water condensate can be cooled and returned to the quench section and the net water condensate produced can be directed to water treatment, such as a sour water stripper.

The moisture reduced hydrogenated process gas will comprise hydrogen sulfide and other combustible constituents, which may be combusted to incinerate all impurities and to oxidize all sulfur compounds to SO₂ and SO₃. To optimize the process, the oxidation may be split in three steps, a thermal incineration step, a homogeneous oxidation step and a catalytic oxidation step:
The thermal incineration step will involve completely incinerating a split stream of the feed at high temperature, typically 1000°C, using support fuel as required and with air addition to provide O₂ for the incineration reactions.

In the second homogeneous oxidation step the balance of the feed is added to the hot incinerated stream together with additional oxygen (typically combustion air) to oxidize the easily combustible components for example H₂S homogeneously at around 400°C to 600°C, leaving more heat stable component like H₂, CO and COS in the partially oxidized process gas.

In the third step, catalytic oxidation, the partially oxidized process gas is cooled, typically to around 200°C, and directed to a catalytic oxidation step where the majority of the residual combustibles are oxidized, to form an SO₂ rich oxidized process gas.

The catalytic oxidation step will typically be carried out in the presence of a catalytically active material comprising one or more of vanadium, palladium and platinum. It may be beneficial that the catalytically active material is in the form of a monolith structure, as this will minimize the pressure drop in the process. The effective temperature will be in the range from 200°C to 550°C, and to condition the process gas appropriate cooling is often required.

The feed split is made such that a minimum but effective temperature is obtained in the second step, typically this temperature is higher than 400°C and less than 800°C, since this will minimize the amount of support fuel and combustion air required, and thus also minimize the volume of process gas flow. Especially if multiple feed streams are directed to the desulfurization process, segregated feeding to the Claus reaction furnace, the thermal incineration step, the homogeneous oxidation step and the catalytic oxidation step may be relevant after consideration of the composition of the individual feed streams, e.g. to avoid directing NH₃ rich streams to the Claus process.

As mentioned an alternative oxidation process for the hydrogenated process gas, may only involve a single thermal incineration step. This single step incineration is simpler but will increase size of all equipment in the WSA^{®} process and consume significantly more support fuel.

A further alternative is to design a 100% catalytic oxidation process for the hydrogenated process gas, which may operate at lower temperatures and thus require less or no support fuel. Due to the relatively high heating value of a hydrogenated Claus tail gas, such a catalytic layout may typically require staged addition of O₂ (or air) possibly in combination with recirculation of the SO₂ rich oxidized hydrogenated process gas in order to control the temperatures at the inlet and outlet of the catalytic reactor(s).

The hydrogenation of elemental sulfur will have the benefit of converting H₂ to H₂S which is easier to oxidize, either homogeneously or catalytically, and thus the hydrogenation contributes to lowering the requirements for support fuel.

For the WSA^{®} process, the gas must comprise a sufficient amount of water for hydration of SO₃ to form H₂SO₄. When the moisture reduced hydrogenated process gas originates from a Claus tail gas, the sulfur will mainly be in the form of H₂S and furthermore the gas will contain an amount of excess hydrogen, which will oxidize to form water, and accordingly it will typically not be of concern. However, it may be necessary to consider the amount of water left in the gas stream after the initial quench process by appropriate selection of quench conditions, including temperature. Typically, an excess of 2 mole% water is required for efficient hydration of SO₃.

### Figures

- Figure 1: shows a process which is an embodiment of the present disclosure.
- Figure 2: shows a process which is an embodiment of the prior art.

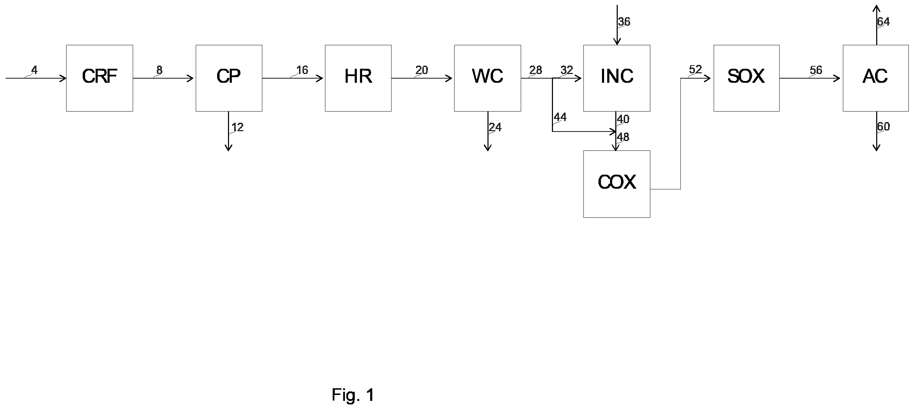

Figure 1 shows a process in which a sulfur rich feedstock 4 is directed to a Claus reaction furnace, CRF, in which substoichiometric combustion takes place, to produce a Claus process feed gas, 8. The Claus process feed gas, 8, in which the ratio between H₂S and SO₂ is approximately 2:1, is directed to a Claus process, CP, in which catalytic Claus reaction takes place, reacting SO₂ with H₂S to form elemental sulfur, which is withdrawn in the sulfur line, 12. The Claus process, CP, may include multiple catalytic Claus reactors, as known in the art. The Claus process, CP, also produces a process gas comprising elemental sulfur, H₂ and water, 16, which is directed to a hydrogenation reactor, HR, where it contacts a material catalytically active in hydrogenation, such a catalyst comprising Co and Mo on alumina. A hydrogenated process gas, 20, in which substantially all elemental sulfur is converted to H₂S is directed to a water condenser, WC, in which the hydrogenated process gas, 20, is cooled, to allow a water condensate, 24, to condense, and by withdrawn to the water treatment system of the plant. An amount of the water condensate may be cooled and directed as quench to the water condenser, WC, but other means of cooling may also be used. A moisture reduced hydrogenated process gas, 28, is withdrawn and directed to the WSA^{®} unit. The stream is split in a moisture reduced hydrogenated process gas for incineration, 32, and a moisture reduced hydrogenated process gas for homogeneous oxidation, 44. The moisture reduced hydrogenated process gas for incineration, 32, is directed to an incinerator, INC, where it is combined with , a support fuel, 36 and an oxygen rich gas stream (not shown) which may be atmospheric air, possibly preheated by process heat. The incinerated process gas, 40, will have an elevated temperature, such as 900°C to 1100°C or even higher. It is combined with the moisture reduced hydrogenated process gas for homogeneous oxidation, 44, which thereby is heated to ignition temperature for homogeneous oxidation of H₂S, such as from 400°C to 600°C or even 800°C. At this stage, an amount of oxygen (typically air) can be added to provide sufficient oxygen for the homogenous and catalytic reactions. At this temperature other compounds, including H₂ and CO are not completely oxidized, and this partially oxidized process gas, 48, (typically after cooling to 200°C-400°C) enters a catalytic oxidation reactor, COX, where it contacts a material catalytically active in oxidation, typically comprising an amount of Pd on a monolithic support, providing an SO₂ rich process gas, 52. This SO₂ rich process gas, 52, is directed to an SO₂ oxidation reactor, SOX, at a temperature between 380°C and 400°C, to contact a material catalytically active in oxidation of SO₂ to SO₃, which typically comprises a vanadium-alkali melt on refractive support. Depending on the concentration of SO₂ the SO₂ oxidation reactor, SOX, may have one or more catalytic zones with intermediate cooling zones, to ensure that the equilibrium between SO₂ and SO₃ favor SO₃. The SO₃ rich process gas, 56, leaving the SO₂ oxidation reactor, SOX, will be a rich in SO₃ and H₂O, which readily react to produce H₂SO₄ in the gas phase In the acid condenser, AC, which is made from acid resistant material, such as glass tubes, the process gas is cooled, typically by heat exchange with atmospheric air, used for combustion air. Concentrated sulfuric acid, 60, will condense, for withdrawal, and clean desulfurized process gas, 64, may be released to the environment.

In a further embodiment, if other sources of process gas were available, these may be directed to the incinerator, INC, the catalytic oxidation reactor, COX or added for homogeneous oxidation with 44, depending on the composition, ignitability and heating value of these process gases. Similarly, oxygen can be added to the incinerator, the homogeneous oxidation zone, the catalytic oxidation reactor (COX) and/or SO₂ oxidation reactor (SOX) to optimize oxidation reactions and minimizing process gas volume

In a further embodiment the incinerator, INC, and the catalytic oxidation reactor COX, may be replaced by an appropriate catalytic system, with one or more types of catalyst, or by a simplified system only employing an incinerator.

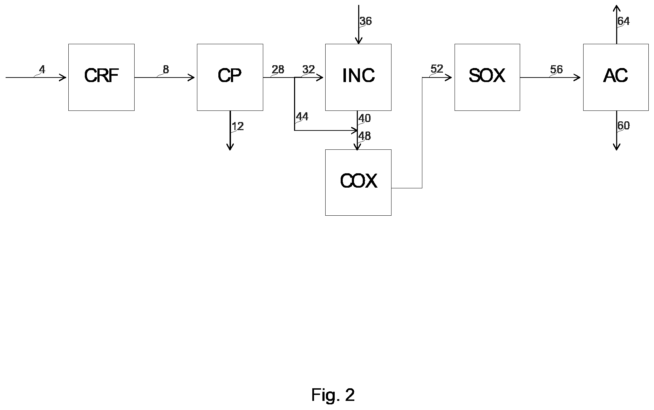

Figure 2 shows a similar process according to the prior art in which a sulfur rich feedstock 4 is directed to a Claus reaction furnace, CRF, in which substoichiometric combustion takes place, to produce a Claus process feed gas, 8, in which the ratio between H₂S and SO₂ is approximately 2:1. The Claus process feed gas, 8 is directed to a Claus process, CP, in which catalytic Claus reaction takes place, reacting SO₂ with H₂S to form elemental sulfur, which is withdrawn in the sulfur line, 12. The Claus process, CP, may include multiple catalytic Claus reactors, as known in the art. The Claus process, CP, also produces a process gas comprising elemental sulfur compounds, H₂ and water, 16, which contrary to the process of Figure 1 is directed to the WSA^{®} process, where it is split in a process gas for incineration, 32, and a process gas for homogeneous oxidation, 44. The process gas for incineration, 32, is directed to an incinerator, INC, where it is combined with a support fuel, 36 and an oxygen rich gas stream (not shown) which may be atmospheric air, possibly preheated by process heat. The incinerated process gas, 40, will have an elevated temperature, such as 900°C to 1100°C or even higher. It is combined with the process gas for homogeneous oxidation, 44, which thereby is heated to ignition temperature for homogeneous oxidation of H₂S, such as from 400°C to 600°C or even 800°C. At this stage, an amount of oxygen (typically air) can be added to provide sufficient oxygen for the homogenous and catalytic reactions. At this temperature other compounds, including H₂ and CO are not completely oxidized, and this partially oxidized process gas, 48, (typically after cooling to 200°C-400°C) enters a catalytic oxidation reactor, COX, where it contacts a material catalytically active in oxidation, typically comprising an amount of Pd on a monolithic support, providing an SO₂ rich process gas, 52. This SO₂ rich process gas, 52, is directed to an SO₂ oxidation reactor, SOX, at a temperature typically between 380°C and 400°C, to contact a material catalytically active in oxidation of SO₂ to SO₃, which typically comprises a vanadium-alkali melt on refractive support. Depending on the concentration of SO₂ the SO₂ oxidation reactor, SOX, may have one or more catalytic zones with intermediate cooling zones, to ensure that the equilibrium between SO₂ and SO₃ favor SO₃. The SO₃ rich process gas, 56, leaving the SO₂ oxidation reactor, SOX, will be a rich in SO₃ and H₂O, which readily react to produce H₂SO₄ in the gas phase.

In the acid condenser, AC, which is made from acid resistant material, such as glass tubes, the process gas is cooled, typically by heat exchange with atmospheric air, used for combustion air. Concentrated sulfuric acid, 60, will condense, for withdrawal, and clean desulfurized process gas, 64, may be released to the environment.

### Example

To illustrate the disclosed process, two process simulations have been conducted, corresponding to Figure 1 and Figure 2 respectively.

In both cases a Claus tail gas is directed to a WSA^{®} process, but in Example 1, corresponding to Figure 1, the Claus tail gas is hydrogenated, and excess moisture is removed before directing it to the WSA^{®} process, whereas in Example 2, corresponding to Figure 2, the Claus tail gas is directed to the WSA^{®} process without such intermediate treatment.

In Table 1 and Table 2 the compositions and volume follow of selected process streams of Figure 1 and Figure 2 are shown (stream 48 assumes homogeneous oxidation completed). The examples are summarized in Table 3, where volume flows and other parameters can be compared. It is seen that the amount of fuel gas required is reduced from 713 kg/h to 179 kg/h due to the use of H₂ for conversion of elemental sulfur to H₂S. Furthermore as 19 ton of water condensate is withdrawn every hour, the process volume is reduced correspondingly, such that the dimensions of the WSA^{®} plant may be scaled down by 36%.

**Table 1**

| Streams | 16 | 20 | 28 | 40 | 48 | 56 | 64 |
|---|---|---|---|---|---|---|---|
| COMP. | mole % | mole % | mole % | mole % | mole % | mole % | mole % |
| CO | 0.16 | 0.18 | 0.28 | | | | |
| H₂ | 1.81 | 0.50 | 0.76 | | | | |
| CO₂ | 1.20 | 1.23 | 1.88 | 3.43 | 1.84 | 1.87 | 1.91 |
| COS | 212 ppm | | | | | | |
| CS₂ | 244 ppm | | | | | | |
| H₂S | 0.73 | 1.37 | 2.09 | | | | |
| SO₂ | 0.36 | | | 1.10 | 1.40 | 504 ppm | 515 ppm |
| SO₃ | | | | 370 ppm | 58 ppm | 0.45 | |
| H₂SO₄ | | | | | 2 ppm | 0.93 | 10 ppm |
| Sx | 262 ppm | | | | | | |
| O₂ | | | | 3.00 | 3.65 | 3.03 | 3.09 |
| H₂O | 39.61 | 40.45 | 8.96 | 11.60 | 9.73 | 8.96 | 8.39 |
| Inerts | 56.06 | 56.27 | 86.03 | 80.82 | 83.37 | 84.71 | 86.56 |
| TOTAL (Nm³/h) | 70,573 | 70,263 | 45,921 | 11,394 | 68,394 | 67,310 | 65,881 |

**Table 2**

| Streams | 16 | 40 | 48 | 56 | 64 |
|---|---|---|---|---|---|
| COMP. | mole % | mole % | mole % | mole % | mole % |
| CO | 0.16 | | | | |
| H₂ | 1.81 | | | | |
| CO₂ | 1.20 | 3.44 | 1.89 | 1.92 | 1.94 |
| COS | 212 ppm | | | | |
| CS₂ | 244 ppm | | | | |
| H₂S | 0.73 | | | | |
| SO₂ | 0.36 | 0.71 | 0.89 | 231 ppm | 234 ppm |
| SO₃ | | 238 ppm | 62 ppm | 0.11 | |
| H₂SO₄ | | | 6 ppm | 0.78 | 10 ppm |
| Sx | 262 ppm | | | | |
| O₂ | | 3.00 | 3.60 | 3.20 | 3.25 |
| H₂O | 39.61 | 28.51 | 30.60 | 30.20 | 30.07 |
| Inerts | 56.06 | 64.31 | 63.01 | 63.77 | 64.72 |
| TOTAL (Nm³/h) | 70,573 | 38,127 | 106,744 | 105,462 | 103,931 |

**Table 3**

| | | Example 1 | Example 2 |
|---|---|---|---|
| Claus tail gas flow (Nm³/h) | 16 | 70,573 | 70,573 |
| Water condensate (kg/h) | 24 | 19,566 | 0 |
| Moisture reduced hydrogenated process gas (Nm³/h) | 28 | 45,921 | 70,573 |
| Moisture reduced hydrogenated process gas for incineration (Nm³/h) | 32 | 6,189 | 20,465 |
| Moisture reduced hydrogenated process gas for homogeneous oxidation (Nm³/h) | 44 | 39,732 | 50,108 |
| Support fuel (kg/h) | 36 | 179 | 713 |
| SO2 rich process gas (Nm³/h) | 52 | 68,177 | 106,744 |
| Acid concentration (wt%) | 60 | 92.0 | 91.4 |

## Claims

1. A process for desulfurizing a process gas comprising elemental sulfur, H₂ and water, comprising the steps
a. directing the process gas to contact a material catalytically active in hydrogenation to provide a hydrogenated process gas under effective hydrogenation conditions,
b. cooling and phase separating the hydrogenated process gas, to provide a water condensate and a moisture reduced hydrogenated process gas,
c. oxidizing the moisture reduced hydrogenated process gas after addition of a source of O₂, to form an SO₂ rich process gas,
d. catalytically oxidizing the SO₂ rich process gas to provide an SO₃ rich process gas
e. hydrating the SO₃ in said SO₃ rich process gas to form H₂SO₄ and condensing sulfuric acid and providing a desulfurized process gas substantially free of H₂SO₄ and a liquid stream of concentrated sulfuric acid.

2. A process according to claim 1 wherein the material catalytically active in hydrogenation comprises from 2 wt% to 25 wt% of metal from group 6 of the Periodic table of elements, such as Mo or W, in combination with 1 wt% to 10 wt% of metal from group 8 of the Periodic table of elements, such as Co or Ni, supported on a refractive material, typically alumina, silica or titania.

3. A process according to claim 1 or 2 wherein effective hydrogenation conditions involves a temperature from 200°C to 300°C and a pressure of -0.2 Barg to 1.5 Barg.

4. A process according to claim 1, 2 or 3 wherein the step of cooling and phase separating the hydrogenated process gas comprises adding an amount of water, which optionally comprises an amount of said water condensate.

5. A process according to claim 1, 2, 3 or 4 wherein oxidizing the moisture reduced hydrogenated process gas involves directing an amount of moisture reduced hydrogenated process gas for thermal incineration optionally together with a support fuel, such as natural gas or an H₂S rich gas, to provide an incinerated process gas.

6. A process according to claim 1, 2, 3, 4 or 5 wherein oxidizing the moisture reduced hydrogenated process gas involves heating an amount of moisture reduced hydrogenated process gas for homogeneous oxidation to a temperature of more than 400°C and less than 800°C to provide a partially oxidized process gas, wherein said heating optionally involves combining the amount of moisture reduced hydrogenated process gas for homogeneous oxidation with an incinerated process gas.

7. A process according to claim 1, 2, 3, 4, 5 or 6, wherein oxidizing the moisture reduced hydrogenated process gas involves directing a process gas for catalytic oxidation to contact a material catalytically active in oxidation of one or more of H₂S, CO, H₂ and hydrocarbons, wherein said process gas for catalytic oxidation comprises one or more of an amount of said moisture reduced hydrogenated process gas, said incinerated process gas, said homogeneously oxidized process gas and an amount of process gas comprising a sulfur source.

8. A process according to claim 1, 2, 3, 4, 5, 6 or 7, wherein the process further comprises the steps of
f. directing a sulfur rich feedstock to a sub-stoichiometric combustion to provide a Claus feed gas rich in H₂S and SO₂,
g. directing said Claus feed gas to contact a material catalytically active in the Claus process, to provide a gas rich in elemental sulfur,
h. cooling said gas rich in elemental sulfur, to condense an amount of elemental sulfur for withdrawal, and produce a process gas comprising a reduced amount of elemental sulfur,
i. optionally repeating steps g and h, with said process gas as feed gas in step f,
j. providing said process gas comprising a reduced amount of elemental sulfur, optionally after addition of hydrogen, as said process gas comprising elemental sulfur, H₂ and water.

9. A process according to claim 8, wherein said sulfur rich feedstock comprises an amount of said sulfuric acid.

10. A process plant comprising a hydrogenation reactor, having an inlet and an outlet, water condenser having an inlet, a liquid phase outlet and a gas phase outlet, a process gas oxidizer having a process gas inlet and a process gas outlet, an SO₂ converter having an inlet and an outlet and a sulfuric acid condenser having an inlet, a liquid outlet and a gas outlet, wherein the hydrogenation reactor inlet is configured for receiving a process gas and the hydrogenation reactor outlet is in fluid communication with the water condenser inlet, the water condenser liquid phase outlet is configured for withdrawal of water condensate and the water condenser gas phase outlet in in fluid communication with the process gas oxidizer process gas inlet and the process gas oxidizer process gas outlet is in fluid communication with the SO₂ converter inlet and the SO₂ converter outlet is in fluid communication with the sulfuric acid condenser inlet, the sulfuric acid condenser liquid outlet is configured for withdrawal of sulfuric acid and the sulfuric acid condenser gas outlet is configured for withdrawal of desulfurized process gas.

11. A process plant according to claim 10, wherein said process gas oxidizer comprises an incinerator which further has one or more inlets configured for receiving a support fuel and combustion air.

12. A process plant according to claim 10 or 11, wherein said process gas oxidizer comprises a catalytic oxidation reactor, having an inlet and an outlet and optionally further has one or more inlets configured for receiving a support fuel process gas inlet and a combustion air.

13. A process plant according to claim 10, 11 or 12 further comprising a Claus reaction furnace having an inlet and an outlet, and a Claus reactor having an inlet, an outlet for withdrawal of sulfur and a Claus tail gas outlet, wherein said Claus reaction furnace inlet is configured for receiving a sulfur rich gas and a gas rich in O2 and wherein the Claus reaction furnace outlet is in fluid communication with the Claus reactor inlet and wherein the Claus tail gas outlet is in fluid communication with the inlet of the hydrogenation reactor.

14. A process plant according to claim 13 wherein said outlet for withdrawal of sulfuric acid is in fluid communication with an inlet to the Claus reaction furnace.
